# EUROPEAN PATENT SPECIFICATION

(11) **EP 2 235 594 B1**
(45) Date of publication and mention of the grant of the patent: **25.10.2017**
(21) Application number: 08866053.5
(22) Date of filing: 24.12.2008
(51) Int. Cl.: G03F 7/34, B29D 11/00, B29B 17/02, G02B 26/06

(54) **METHOD OF RELEASING A PLATE MADE OF BRITTLE MATERIAL, ASSEMBLY OF A SUPPORT AND PEELING ARRANGEMENT**
VERFAHREN ZUR FREIGABE EINER PLATTE AUS SPRÖDEM MATERIAL, ANORDNUNG FÜR EINE STÜTZ- UND SCHÄLANORDNUNG
PROCÉDÉ DE LIBÉRATION D'UNE PLAQUE RÉALISÉE EN UN MATÉRIAU FRAGILE, ENSEMBLE COMPRENANT UN DISPOSITIF DE SUPPORT ET UN DISPOSITIF DE RETRAIT

(30) Priority: 28.12.2007 EP 07150482
(43) Date of publication of application: 06.10.2010
(73) Proprietor: Nederlandse Organisatie voor toegepast- natuurwetenschappelijk onderzoek TNO, 2595 DA 's-Gravenhage (NL)
(72) Inventor: NIJENHUIS, Jan Roelof, 2625 LM Delft (NL); HEIJMANS, Jeroen Antonius Cecillia, 5261 EL Vught (NL)
(74) Representative: V.O.
(86) International application number: PCT/NL2008/050851
(87) International publication number: WO 2009/084955

(56) References cited:
- EP-A- 1 315 156
- WO-A1-2016/081391
- JP-A- 1 095 391
- JP-A- 4 211 203
- JP-A- H11 203 736
- US-A- 4 155 962
- US-A- 5 349 443
- US-A1- 2005 213 209
- US-A1- 2006 158 753

## Description

The invention relates to a method for releasing a plate from a support arrangement.

The invention also relates to an assembly of a support arrangement for supporting a plate made of brittle material and a peeling arrangement for releasing a plate made of brittle material from the support arrangement.

Brittle plates that are relatively thin compared to a relatively large surface are commonly very fragile. For example in the field of adaptive optics, glass mirrors are used where the thickness/surface ratio can be approximately 1:1000 or more. When these thin glass plates are handled, e.g. picked up, breakage may easily occur. For example, adaptive mirrors, which may be used in astronomical applications such as telescopes, need to be released from their support arrangements from time to time to be provided with a new coating, and/or to be replaced. These mirrors are for example supported by a support arrangement at over 12.000 points by 12.000 little magnets that are connected to the mirror. These magnets are connected to 12.000 protrusions having diameters of 1,5 mm, for example. If the force to release one magnet is about 2 Newton, the total force for releasing the whole mirror would be about 24.000 Newton. Therefore, when the mirror is released, the mirror oftentimes breaks. There is again a high risk of breaking when placing back the adaptive mirror on its support arrangement.

Another example is a common situation wherein any relatively large thin ceramics or Silicon plate is lying on a flat support arrangement, which may be a flat table. In this case it may be difficult to release the glass plate from the support arrangement. For example in a field such as lithography, or flat screen television manufacture, glass wafers or flat screens are becoming larger and thinner, such that these problems may occur, resulting sometimes in damage to the wafers or flat screens.

EP 1315156 discloses a method of peeling apart compact discs using blown gas.

Therefore it is one of the objects of the invention to provide for an efficient method and/or arrangement wherein a glass plate can be released from a support surface.

In a first aspect of the invention this object and/or other objects may be achieved by a method of releasing a plate made of brittle material, which is able to withstand elastic deformation until the point of failure, from a support arrangement using a peeling arrangement as defined in claim 1.

To release a relatively thin brittle plate according to the invention, first a pulling force can be exerted to an area of the plate such that this area is lifted from a support arrangement over a small distance, wherein preferably this area is located at an edge of the plate. At the same time a second area of the glass plate at an adjacent location, preferably located further away from said edge than the first area, can still be abutting the support arrangement. The small lifting distance of the first area is however small enough to prevent damage, for example by breakage of the plate or cracks in the plate. Subsequently, the second area of the plate can be lifted at said adjacent location, while a third area adjacent the second area is still abutting the support arrangement. This lifting process over distances small enough to prevent damage is repeated sequentially along the plate for third and further areas in a way that the plate is peeled or 'zipped' from the supporting surface. In one embodiment, the plate originally has a straight shape, whereas during peeling the plate takes on a curved shape.

Among others, the invention recognises that under certain conditions it is possible to 'peel' brittle, i.e. non-flexible, thin plates such as large ceramic plates from a support surface without breaking or damaging the plate, and despite the fact that such plates are highly fragile and there is a high risk of breakage when handling such plates. Such plates may comprise brittle material such as ceramics and/or Silicon based material. In the field, brittle materials have the property of being able to withstand elastic deformation until the point of failure. After failure approximately zero plastic deformation results. Herein, "approximately zero" may for example be interpreted as 0,1% or less. Brittle materials may for example have a maximum strain (*ε*) of approximately zero percent, or for example 0,1% percent or less after failure. In the above, plastic deformation may be interpreted as lasting deformation, as opposed to elastic deformation. For example, elastic deformation will occur when bending the plate. 'Brittle material' may also be understood as being 'non-ductile' material. Non-limiting examples may be brittle material such as glass materials such as Zerodur, ULE, Borosilicate, Pyrex, fused silica, and others, or ceramic materials such as for example Silicon Carbide or Silicon, preferably pure Silicon.

Damage may be prevented, for example through the fact that the subsequent forces that are applied to the brittle plate are small compared to one force that would need to be applied to lift the same plate in its entirety at once. The separating of two hard, flat surfaces, of which at least one is relatively thin, can now be achieved at relatively low risk, low costs and efficiently. The plate has a small thickness as compared to its surface dimensions. Preferably, the thickness of the plate is 1000 times smaller, or more than 1000 times smaller than the width or length of the plate. Where the brittle plate becomes thinner, it may be described as a foil or sheet.

In a second aspect of the invention this object and/or other objects may be achieved by an assembly of a support arrangement for supporting a plate made of brittle material, which is able to withstand elastic deformation until the point of failure, wherein the thickness of the plate is more than 100 times smaller than its width or length, and a peeling arrangement for releasing a plate made of brittle material, which is able to withstand elastic deformation until the point of failure, from the support arrangement as defined in claim 8.

In clarification of the invention, these and further embodiments of the invention, and advantages thereof will be further elucidated with reference to the drawing. In the drawing:
figure 1 and 1A show schematic side views of four steps of thin plate peeling methods;
figure 2 shows a schematic side view of a peeling arrangement;
figure 3 shows a top and side view of a glass plate;
figure 4 shows a perspective view of a peeling arrangement;
figures 5A and 5B show schematic front views of a peeling arrangement and peeling method;
figure 6A-C show a peeling method and arrangement;
figure 7 shows a peeling arrangement.

In this description, identical or corresponding areas have identical or corresponding reference numerals. The exemplary embodiments shown should not be construed to be limitative in any manner and serve merely as illustration.

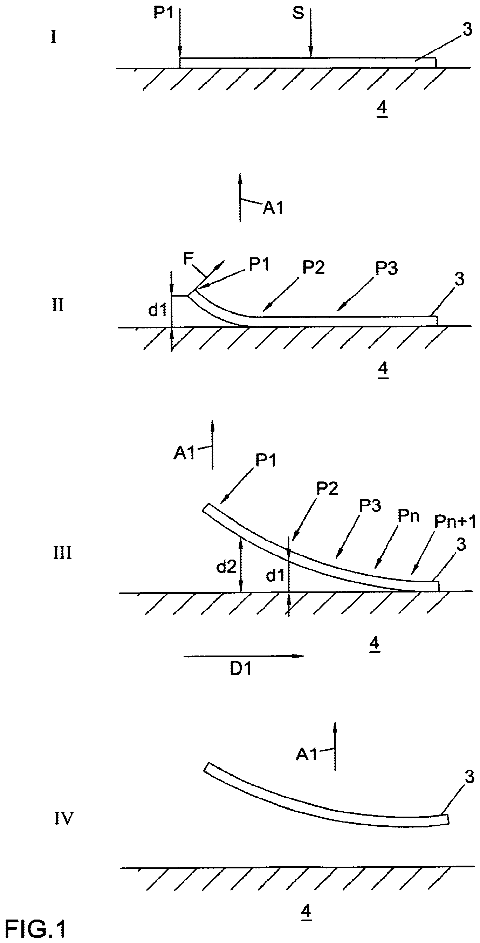

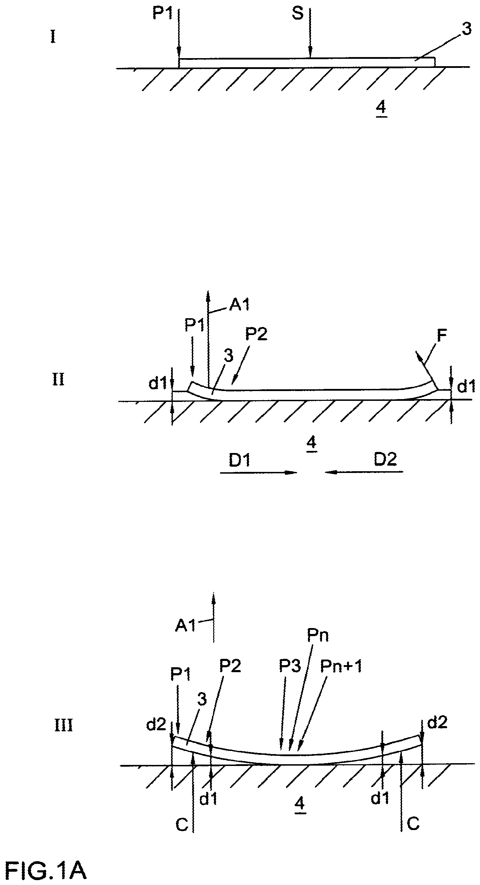

In figure 1 a method according to the invention is shown in steps I - IV, wherein a glass plate 3 is peeled from a support surface 4. In the first step I, the plate 3 has a substantially straight surface S. As can be seen, the plate 3 is supported by the support arrangement 4 substantially along its entire surface S. In an embodiment, the plate 3 and the support arrangement 4 for example have substantially straight surfaces, or are at least parallel to each other, and therefore there can be a strong adhesion between the surfaces, for example caused by one or a combination of underpressure, grease, Van der Waals forces, glue, adhesion, electrostatic adhesion, multiple electro or permanent magnets, suction, etc. In a further embodiment, the glass plate 3 is connected to the support arrangement 4 via multiple contact surfaces, for example one or a combination of magnets, suction elements, multiple glue or adhesion surfaces, etc. For example, in adaptive optics, the plate 3 may be connected to the support arrangement 4 via magnets. In this example the plate 3 comprises glass, although any plate 3 that comprises brittle material can be used. Such brittle material may for example comprise any ceramic and/or Silicon material, more particularly glass materials such as Zerodur, ULE, Borosilicate, Pyrex, fused silica, and others, ceramic materials such as for example Silicon Carbide or pure Silicon.

As shown in step II, a first area p1 of the plate 3 is moved with respect to the support arrangement 4 in a direction A1 away from the support arrangement 4, while a second area p2 and further area's p adjacent the first area p1 abuts the support arrangement 4. In the shown example the first area p1 comprises an edge area. The first area p1 is moved over such a small distance d1 that the plate 3 does not break. Subsequently, as shown in step III, the second area p2 is moved over a small distance d1 with respect to the support arrangement 4 in a direction A1 away from the support arrangement 4, while a third area p3 adjacent the second area p2 still abuts the support arrangement 4. At the same time the distance d2 between the first area p1 and the support arrangement may increase. In the same manner (not shown) sequentially further areas pn are moved with respect to the support arrangement 4 in a direction A1 away from the support arrangement 4, while respective adjacent areas pn+1 abut the support arrangement 4. Said areas p1, p2, p3, pn, pn+1 are sequentially moved with respect to the support arrangement 4, with increasing distance, in a direction A1 away from the support arrangement 4. The lifting forces to the glass plate 3 are applied in a travelling direction D1 such that the plate 3 is peeled from the support arrangement 4. In the travelling direction D1 along which the areas p1, p2, p3, pn, pn+1 are sequentially released from the supporting arrangement 4 the distance d1, d2 between the glass plate 3 and the support arrangement 4 increases. The distance d1 between the glass plate 3 and the support arrangement 4 increases at the edges of the plate 3 while the plate 3 is peeled, preferably in such a way that the plate takes on a curved shape with respect to the support arrangement 4. In possible embodiments, both the support arrangement 4 and the plate 3 may have a curved shape, wherein in case of a concave support arrangement 4 the radius of curvature of the plate 3 may increase during peeling, and in case of a convex shaped support arrangement 4 the radius of curvature of the plate may for example decrease during peeling. In a preferred embodiment, the plate 3 is peeled off in a direction D1 until at last the outer edge is peeled off and the plate can be taken off in a direction A1 (see additional step IV), as can be seen from figure 1. As can be seen in figure 1A, the plate 3 can for example also be peeled in two travelling directions D1, D2 such that in the end, the last glass plate area abutting the support arrangement 4 is approximately in the middle, at least seen from a front view.

In practice there can be infinite areas p that are sequentially lifted from the support arrangement 4 when the plate 3 is peeled. In other examples, the plate 3 is supported by multiple contact points or contact surfaces, such that the plate 3 can be peeled row after row, for example.

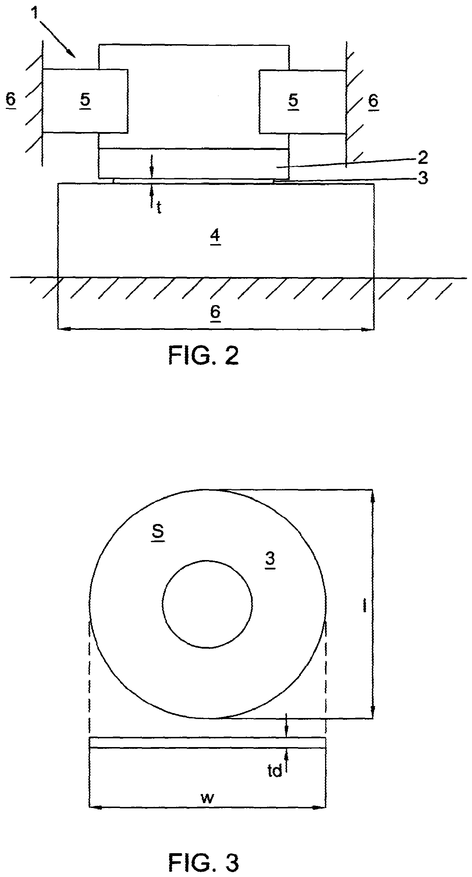

Figure 2 shows a schematic view of a peeling arrangement 1 for exerting pulling forces F to the glass plate 3. The peeling arrangement 1 is arranged to release, and more specifically, peel the glass plate 3 from the support arrangement 4. For this, the peeling arrangement 1 is provided with an abutting arrangement 2 extending along the supporting arrangement 4 and the glass plate 3. The abutting arrangement 2 may be arranged to suck the glass plate 3 to the surface of the abutting arrangement 2. The abutting arrangement is arranged such that a strong suction, or at least adhesion between the surfaces can be applied, for example caused by one or a combination of underpressure, grease, Van der Waals forces, glue, grease, adhesion fluid or other adhesion means, electrostatic forces, multiple electro or permanent magnets, suction (sucking holes, sucking caps), etc. Preferably, the abutting surface has such a width and length that a surface of at least 700 square centimetres is provided, to be able to pick up large glass plates 3. Preferably, the abutting arrangement 2, or at least the surface thereof, comprises material, for example a coating layer, that is physically softer than the glass plate 3 material, to prevent or decrease damage to the glass plate 3 by the abutting arrangement 2 when the abutting arrangement 2 abuts the glass plate 3. Also it would be advantageous if the coefficient of expansion of the abutting arrangement 2, or at least the surface thereof, is approximately the same as the coefficient of expansion of the glass plate 3. The peeling arrangement 1 is provided with frame parts 5 that support at least part of the peeling arrangement 1, and that may be connected to the ground 6. The frame parts 5 determine the position of the abutting arrangement 2 with respect to the support arrangement 4, for example to prevent that the abutting arrangement 2 puts too much pressure on the glass plate 3 which could damage the glass.

The peeling arrangement 1 is used for releasing relatively large and thin glass plates 3 or the like that have straight surfaces S from support arrangements 4. These glass plates 3 preferably have a small thickness t compared to their surface S (see figures 2, 3). Examples of suitable glass plates 3 may be adaptive mirrors, or wafers, for example. The glass plates could also comprise relatively large window shields or mirrors, for example. These and different other types of plates will in this description be referred to as glass plates 3, although the plate may comprise other material besides or instead of glass 3. Also the invention could be used to separate multiple glass plates 3 from each other. In an embodiment, a suitable glass plate 3 has a thickness d of less than 2 mm, preferably less than 1 mm, for example approximately 0,7 mm. The plate 3 may for example have a maximum length 1 and/or width w of more than 0,3 m, preferably more than 1m (see figure 3), for example approximately 2 m. The ratio between the thickness d and the length or width w can for example be, preferably approximately 1:1000, or higher. The dimensions of the abutting surface of the abutting arrangement 2 may for example be equal or larger than the surface C of the glass plate 3 such that in use the abutting arrangement 2 extends along substantially the whole glass plate 3. However the invention can also be implemented on much smaller scales according to the same principles.

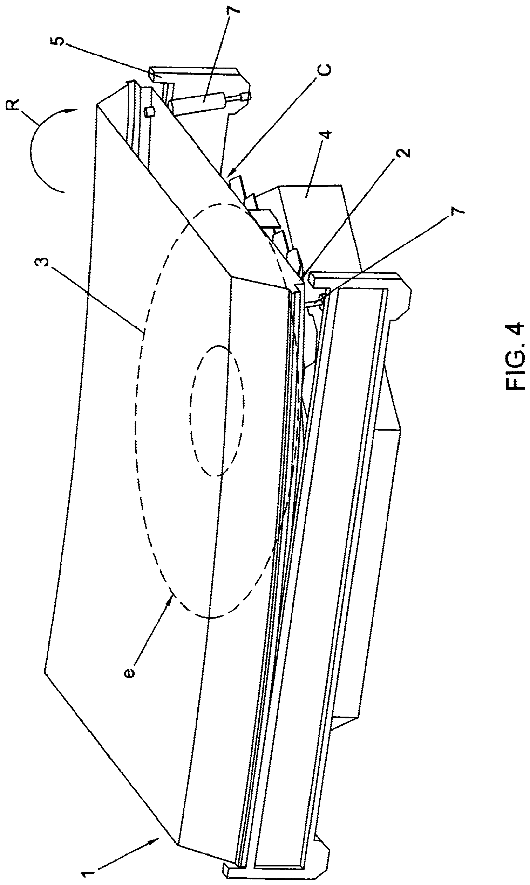

In figure 4 an embodiment of a peeling arrangement 1 is shown, wherein the abutting arrangement 2 comprises a curved abutting surface C, for example part of a cylinder. The abutting surface C can be arranged such that a strong adhesion between the surfaces can be applied, for example caused by one or a combination of underpressure, grease, Van der Waals forces, glue, grease, adhesion fluid or other adhesion means, electrostatic forces, multiple electro or permanent magnets, suction (sucking holes, sucking caps), etc. Preferably the curved abutting surface C has sucking means embodied by for example, magnets (in case the glass plate comprises metal), sucking holes, sucking caps, glue, adhering fluid, other adhesion forces, or the like to suck the glass plate 3 to the abutting surface C. With the sucking means it is possible for the abutting arrangement 2 to exert a pulling force F to the glass plate 3 when the abutting arrangement 2 is moved in a direction away from the support arrangement 4.

In use, the curved abutting surface C is rolled along the glass plate 3 in a direction R, and when the abutting surface C presses the glass plate 3 the glass plate 3 sticks to the abutting surface C. The abutting surface C preferably starts rolling over the glass plate 3 at an outer edge of the glass plate 3. The part of the abutting surface C moving away from the support arrangement 4 after having pressed against the glass plate 3 takes along the glass plate 3 during rolling by exerting a pulling force F, e.g. a sucking force, to the glass plate 3, such that the glass plate 3 is peeled from the supporting arrangement 4. The glass plate 3 sticks to the abutting surface C, and the curve radius of the abutting surface C is such that cracks in the glass plate 3 are prevented. The peeling starts at the edge e, and ends at the opposite edge of the glass plate 3, after which the plate 3 is peeled in its entirety. Advantageously, the glass plate 3 can be peeled or 'unzipped' from the support arrangement too, e.g. row after row, wherein the forces for peeling the plate can be much lower than the total force that might be needed for releasing the total plate 3 at the same time.

As can be seen from figure 4 the peeling arrangement 1 is provided with frame parts 5 which in this case comprise guides. The guides support the abutting arrangement 2 when it is rolled along the glass plate 3, such that it is prevented that the abutting arrangement overpresses against the glass plate 3, which could cause damage. In an embodiment, the abutting arrangement 2 is provided with curved flanges 8 that roll over said guides too prevent that the entire weight rolls over the glass plate 3.

In an embodiment, the peeling arrangement 1 is provided with resilient elements, also to be able to prevent damaging the glass plate 3. The peeling arrangement 1 may be provided with actuating elements 7, for example pistons, that drive the abutting arrangement 2 during its rolling action. Also, the actuating elements 7 may support the abutting arrangement 2 and/or comprise resilient elements.

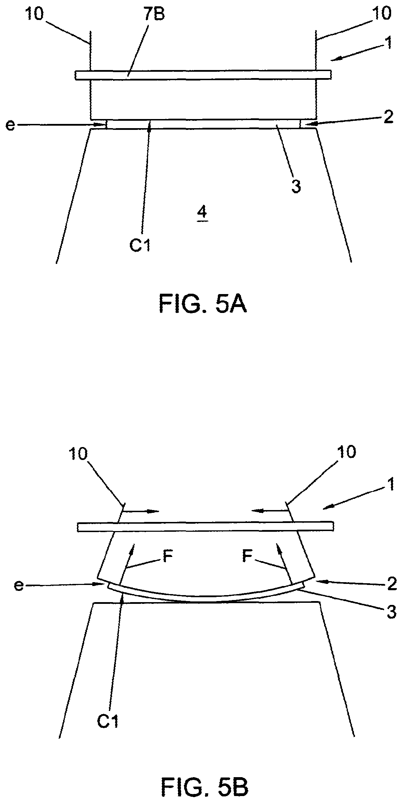

Another embodiment of a peeling arrangement 1 is shown in figure 5A and 5B. The peeling arrangement 1 is provided with an abutting arrangement 2, having an abutting surface C1 that is configured to take on a curved shape for peeling a glass plate 3 (figure 5B). The glass plate 3 may be adhered to the abutting surface C1 in the same way as in the embodiment of figure 4. Because of the adherence properties, the abutting arrangement 2 can exert a pulling force F to the glass plate 3.

Before starting the peeling process, the abutting surface C1 is brought into contact with the glass plate 3, wherein both surfaces, i.e. the contact surface between the glass plate 3 and the abutting surface C1 may be substantially straight (figure 5A). Then, the abutting surface C1 and the glass plate 3 are adhered e.g. by the sucking or adherence properties or the like of the abutting surface C1. Subsequently, the abutting surface C1 is automatically and/or manually bent with respect to the support arrangement 4 while the glass plate 3 is adhered to it, such that also the glass plate 3 is bent (figure 5B). During curving of the abutting surface C1 the glass plate 3 will let go of the support arrangement 4 starting at the edges e, and while the diameter of the curving abutting surface C decreases the glass plate 3 will be lifted from the support arrangement 4 from the edges towards the middle, seen from a front view. In the end adhesion is so low that the glass plate 3 can be released completely from the support arrangement 4 relatively easy. In this embodiment an originally straight abutting surface C1 is made to curve for peeling the glass plate 3. This embodiment may allow for a relatively light weight peeling arrangement and/or relatively controlled movement of the abutting surface C1 with respect to the glass plate 3.

In an embodiment, an actuating element 7B is provided for curving the abutting surface C1. The actuating element 7B may for example comprise a screw thread that protrudes two opposite walls 10 of the peeling arrangement 1, protruding at a straight corner from the abutting surface C1. While turning the screw thread in one direction the two opposite walls move towards each other such that the middle of the surface of the abutting arrangement 2 moves towards the outside and the surface C1 is bent (figure 5B).

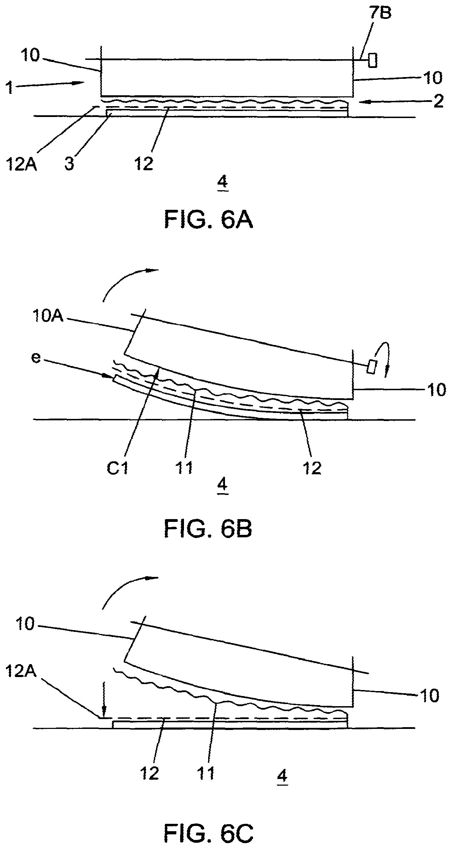

In another exemplary embodiment, one wall 10A is moved in a direction away from the support arrangement 4 such that the abutting surface C1 curves and the glass plate 3 is released at one side edge e instead of two (see fig. 6B) . It will be recognised by the skilled person that there are multiple ways for curving an originally straight abutting surface C1 or rolling an originally curved abutting surface C1.

In an embodiment, the glass plates 3 are cleaned with First Contact® spray or the like, wherein the glass plates 3 may for example comprise large optical plates such as adaptive mirrors. The spray is sprayed on the plate 3, after which it is dried to form a film on the surface of the plate 3. Thereafter the film is taken from the plate 3 such that all the debris sticks to the film and is taken off. According to an embodiment of the invention, the First Contact® spray or the like is used to form a protective foil 12 on the glass plate 3 (e.g. see fig. 6A-C). The spray is sprayed on the glass plate 3, and after it has dried, it forms a protective foil when the abutting arrangement 2 abuts the glass plate 3 for peeling the plate 3 from the supporting arrangement 4, or when placing back the glass plate 3 on the supporting arrangement 4. The use of First Contact® spray or the like can provide for protection and cleaning of the glass plates 3. For the same purpose, other protective layers can also be suitable, for example Pre-cote® or a silicone rubber.

In a further embodiment an adhering fluid is applied to the abutting surface C. This fluid may for example exclude the necessity of separate suction elements or the like in the abutting arrangement 2. Besides, such a fluid could have cleaning properties. In other cases, the glass plate 3 needs to be cleaned anyway such that it is little or no extra effort to apply an adhering fluid.

In figure 6A-C, a further embodiment is shown, wherein the peeling arrangement 1 may have same and/or like features as the arrangement shown in figures 5A and 5B, and is additionally provided with said adhering fluid such as grease or another suitable substance 11 on its abutting surface C1. This substance 11 provides for a certain adhering and/or sucking force on the plate 3. If the substance 11 is provided between the abutting arrangement 2 and the plate 3, the sucking may be the result of a vacuum between the abutting arrangement 2 and the plate 3, which vacuum is caused by the substance 11 driving out the air while pushing the abutting arrangement 2 and the plate 3 together. Instead of grease for example other suitable substances 11 may be applied such as, but not limited to, paste, oil, Vaseline, or other fluids such as normal water, etc. Every time when the substance 11 is put on the abutting arrangement 2 it will surround and/or absorb particles such as dust that otherwise might have caused scratches on the plate 3.

Furthermore, as shown in figures 6A-C, a protective and/or cleaning foil 12 is provided on the glass plate 3. This foil 12 may comprise any suitable foil, such as for example contact spray, an elastomer such as rubber. The foil 12 cleans the plate 3 when it is taken off the plate 3. A further effect may be that the foil 12 can be used to release the plate 3 from the abutting surface C1 while placing back the glass plate 3 on the respective support surface 4 (see fig. 6C). For example, first the abutting surface C1 is straightened and/or the plate 3 is brought into a parallel position with the support surface 4, and thereafter in contact with the support arrangement 4. Thereafter, the glass plate 3 is released from the peeling arrangement 1 by again curving the abutting arrangement 2 while the foil 12 is pressed downwards, for example by holding or pushing a part 12A of the foil 12. In this way the plate 3 does not stick to the abutting arrangement 2 while peeling of the abutting arrangement 2. After that, the foil 12 can be taken off the plate 3.

A method for peeling as shown in figure 6A-C comprises first placing the peeling arrangement 1 above the plate 3, in contact with and parallel to the plate 3. The foil 12 may be provided over the plate 3, and grease or another suitable substance 11 may be applied to the abutting surface C1, such that said foil 12 and substance 11 are sandwiched between the plate 3 and the abutting arrangement 2. Then, the abutting surface C1 is curved at on side, while pressing the abutting arrangement 2 to the plate 3 at the other side (see fig. 6B), such that the plate 3 is peeled from the support arrangement 4. The plate 3 sticks to the abutting arrangement 3 by a sticking substance 11 such as grease that is applied to the surface C1. After having cleaned or replaced the plate 3, it is placed back on the support arrangement 4 with the aid of the peeling arrangement, preferably by rolling off the abutting arrangement 2 from the plate 3 while holding the foil 12, as explained earlier and shown in figure 6C.

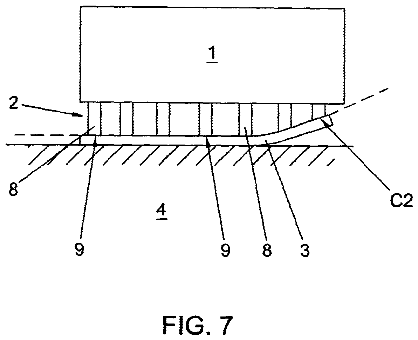

In figure 7 another embodiment is shown, wherein the abutting arrangement 2 comprises an abutting surface C2, drawn by a dashed line, embodied by multiple contact surfaces 9 of abutting elements 8. Within this description, a plurality of contact surfaces can be regarded as one abutting surface C2. The abutting elements 8 may comprise any contact surface or point suitable for applying a pulling force to the glass plate 3, such as for example magnets (if the glass plate comprises metal), sucking caps or holes, etc. In an embodiment, the abutting elements 8 can be retracted with respect to the supporting surface 4, or with respect to the peeling arrangement, to peel the glass plate 3 from the supporting surface 4, according to the principles as explained above. In another embodiment, the abutting surface C2 has a preformed curved shape and the abutting arrangement is rolled over the glass plate 3, for example.

In general, the invention can be used for maintaining, handling and/or replacing plates of any brittle material, for example, though not exclusively ceramics and/or Silicon material. The invention may for example be suitable for handling optical plates such as adaptive mirrors, wafer handling, flat screen components, etc., although it is not limited to just these applications. The invention may erase to need to prevent separate flat surfaces sticking to each other because they can be separated relatively easily, at least with the aid of the invention. Now the sticking of multiple flat surfaces to each other, e.g. multiple glass plates 3 such as wafers, can be turned into an advantage, e.g. for transport, storage or piling.

It has been found that the invention could also find useful application for releasing thin, ductile plates, i.e. foils or sheets, which could for example be adaptive mirror plates, which thin, ductile plates may undergo deformation when they are taken from a surface, for example from an adaptive mirror support arrangement. Especially in adaptive optics, wherein the mirror is adhered via a multitude of contact points, in particular magnets, 'peeling' off the plate according to the invention may prevent deformation or the plate.

In an embodiment, the plate 3 comprises an adaptive optical plate such as an adaptive optical mirror or is a part, for example a layer, of an adaptive mirror. The support arrangement 4 may form part of the adaptive optical arrangement, for example a telescope having a support arrangement 4 for the glass plate 3. In certain embodiments, the adaptive optical plate 3 comprises an adaptive optical lens, filter, or mirror, or is a part, for example a layer, of a lens or lens assembly, a filter or filter assembly, a mirror or mirror assembly in an adaptive optical arrangement. As known in the field, stringent requirements apply to such adaptive optical plates 3, i.e. even the slightest damage to these adaptive optical plates 3 would make them unsuitable. The invention prevents causing such damage while it allows efficient handling of the plates 3.

Next to brittle material such as glass materials such as Zerodur, ULE, Borosilicate, Pyrex, fused silica, and others, ceramic materials such as for example Silicon Carbide or pure Silicon, such plates may comprise metal foils such as for example beryllium copper, aluminium, or polymers having reflective coatings, such as Polyimide, for example.

Certain embodiments of the invention could also be of use in a situation wherein any relatively large thin ceramics or Silicon plate is placed on or in a support arrangement, which may be a flat table or a support frame, and wherein it is relatively difficult to release the glass plate from the support arrangement. For example in a field such as lithography, or flat screen television manufacture, glass wafers or flat screens are becoming larger and thinner, and more difficult to handle. Here also, the problem of the fragile plate sticking to the support surface may exist, which problem can be overcome by the invention.

It shall be obvious that the invention is not limited in any way to the embodiments that are represented in the description and the drawings. Many variations and combinations are possible within the scope of the invention as outlined by the claims.

## Claims

1. Method of releasing a plate (3) made of brittle material, which is able to withstand elastic deformation until the point of failure, from a support arrangement (4) using a peeling arrangement (1), wherein the thickness of the plate (3) is more than 100 times smaller than its width or length, and is supported by the support arrangement (4) substantially along its surface,
wherein the peeling arrangement (1) comprises an abutting arrangement (2), having an abutting surface (C, C1, C2), for abutting the plate (3), wherein the abutting surface (C, C1, C2) is a curved shape that is rolled along the plate (3) or is automatically and/or manually curved from straight into a curved shape,
the method comprising:
the abutting arrangement (2) sucking or adhering the plate (3) to its abutting surface (C, C1, C2) at the opposite side of the plate to the support arrangement (4), exerting a pulling force to a first area (P1) of the plate (3) from an area of the abutting surface (C, C1, C2) to which the first area (P1) of the plate (3) is being sucked or adhered such that the first area is moved in a direction away (A1) from the support arrangement (4), while a second area (P2) of the plate adjacent the first area abuts the support arrangement (4), subsequently exerting a pulling force to the second area (P2) from an area of the abutting surface (C, C1, C2) to which the second area (P2) of the plate (3) is being sucked or adhered such that the second area is moved in a direction away from the support arrangement (4), while a third area (P3) of the plate adjacent the second area abuts the support arrangement (4), and in the same manner the abutting arrangement (2) moving sequentially further areas (Pn) in a direction away from the support arrangement (4), while respective adjacent areas (Pn+1) abut the support arrangement (4), wherein the abutting arrangement (2) sequentially moves said areas in a direction away from the support arrangement (4) in accordance with the curved shape of the abutting surface (C, C1, C2) such that the plate (3) is peeled from the support arrangement (4).

2. Method according to claim 1, wherein after being peeled from the support arrangement, the plate is held at the abutting surface of the abutting arrangement.

3. Method according to claim 2, wherein the abutting surface extends along substantially the entire plate surface.

4. Method according to any of the preceding claims, wherein the plate (3) has a thickness of less than 2 mm, preferably less than 1 mm, and has a length or width of more than 0,3 m, preferably a surface of more than 700 square centimetres.

5. Method according to any of the preceding claims, wherein the radius of curvature of at least a part of the plate and/or the abutting arrangement during or after peeling is substantially between approximately 1 and 100 metres.

6. Method according to any of the preceding claims, wherein the plate comprises a mirror for use in the field of adaptive optics.

7. Assembly (4, 1) of a support arrangement (4) for supporting a plate (3) made of brittle material, which is able to withstand elastic deformation until the point of failure, wherein the thickness of the plate (3) is more than 100 times smaller than its width or length, and a peeling arrangement (1) for releasing the plate (3) made of brittle material from the support arrangement (4), wherein the peeling arrangement (1) is provided with an abutting arrangement (2) extending along the support arrangement (4), such that the abutting arrangement (2) and the support arrangement (4) are arranged to abut opposite sides of the plate (3), wherein the peeling arrangement (1) is provided with a frame (5) for supporting the abutting arrangement (2), which frame (5) is arranged to determine the position of the abutting arrangement (2) with respect to the support arrangement (4), wherein the abutting arrangement (2) comprises an abutting surface (C, C1, C2) which is arranged to adhere to or suck a surface of the plate (3) and has a curved shape which in use is rolled along a plate or is arranged to retract in parts along a curved shape for curving the plate (3), and wherein the abutting arrangement (2) is arranged to increase the distance of the abutting surface (C, C1, C2) from the support arrangement (4) sequentially at adjacent locations for peeling of said plate (3) from the support arrangement (4).

8. Assembly (4, 1) according to claim 7, wherein the surface of the abutting arrangement (2) is at least 700 square centimetres.

9. Assembly (4, 1) according to any of claims 7-8, wherein the abutting arrangement is provided with an actuating element for curving a plate made of brittle material.

10. Assembly (4, 1) according to any of claims 7 or 9, wherein the abutting surface is approximately equally sized to the plate or has a surface of at least 700 square centimetres.

## Patentansprüche

1. Verfahren zum Ablösen einer Platte (3), die aus sprödem Material hergestellt ist, die in der Lage ist, bis zum Ausfallpunkt einer elastischen Verformung standzuhalten, von einer Trägeranordnung (4) unter Verwendung einer Abziehanordnung (1),
wobei die Dicke der Platte (3) mehr als 100 mal kleiner als ihre Breite oder Länge ist und von der Trägeranordnung (4) im Wesentlichen entlang ihrer Oberfläche getragen wird,
wobei die Abziehanordnung (1) eine anstoßende Anordnung (2) umfasst mit einer Anlageoberfläche (C, C1, C2) zum Anliegen an der Platte (3), wobei die Anlageoberfläche (C, C1, C2) eine gekrümmte Form ist, die entlang der Platte (3) gerollt wird oder automatisch und/oder von Hand von einer geraden in eine gekrümmte Form gekrümmt wird,
das Verfahren umfassend:
Saugen oder Kleben der Platte (3) auf ihrer Anlageoberfläche (C, C1, C2) der anstoßenden Anordnung (2) auf der der Trägeranordnung (4) gegenüberliegenden Seite der Platte,
Ausüben einer Zugkraft auf einen ersten Bereich (P1) der Platte (3) von einem Bereich der Anlageoberfläche (C, C1, C2), an den der erste Bereich (P1) der Platte (3) angesaugt oder befestigt ist, sodass der erste Bereich in einer Richtung weg (A1) von der Trägeranordnung (4) bewegt wird, während ein zweiter Bereich (P2) der Platte benachbart dem ersten Bereich an der Trägeranordnung (4) anliegt,
nachfolgend Ausüben einer Zugkraft auf den zweiten Bereich (P2) von einem Bereich der Anlageoberfläche (C, C1, C2), an den der zweite Bereich (P2) der Platte (3) angesaugt oder befestigt ist, sodass der zweite Bereich in einer Richtung weg von der Trägeranordnung (4) bewegt wird, während ein dritter Bereich (P3) der Platte benachbart dem zweiten Bereich an der Trägeranordnung (4) anliegt,
und in der gleichen Weise nacheinander Bewegen weiterer Bereiche (Pn) in einer Richtung weg von der Trägeranordnung (4) durch die anstoßende Anordnung (2), während die entsprechenden benachbarten Bereiche (Pn+1) an der Trägeranordnung (4) anliegen,
wobei die anstoßende Anordnung (2) nacheinander die Bereiche in einer Richtung weg von der Trägeranordnung (4) gemäß der gekrümmten Form der Anlageoberfläche (C, C1, C2) bewegt, sodass die Platte (3) von der Trägeranordnung (4) abgezogen wird.

2. Verfahren gemäß Anspruch 1, wobei die Platte, nachdem sie von der Trägeranordnung abgezogen wurde, an der Anlageoberfläche der anstoßenden Anordnung gehalten wird.

3. Verfahren gemäß Anspruch 2, wobei sich die Anlageoberfläche über im Wesentlichen die gesamte Plattenoberfläche erstreckt.

4. Verfahren gemäß einem der vorhergehenden Ansprüche, wobei die Platte (3) eine Dicke von weniger als 2 mm, bevorzugt weniger als 1 mm hat und eine Länge oder Breite von mehr als 0,3 m, bevorzugt eine Fläche von mehr als 700 Quadratzentimetern hat.

5. Verfahren gemäß einem der vorhergehenden Ansprüche, wobei der Krümmungsradius mindestens eines Teils der Platte und/oder der anstoßenden Anordnung während oder nach dem Abziehen im Wesentlichen zwischen ungefähr 1 und 100 Metern beträgt.

6. Verfahren gemäß einem der vorhergehenden Ansprüche, wobei die Platte einen Spiegel zur Verwendung auf dem Gebiet der adaptiven Optik umfasst.

7. Anordnung (4, 1) einer Trägeranordnung (4) zum Tragen einer Platte (3), die aus sprödem Material hergestellt ist, die in der Lage ist, bis zum Ausfallpunkt einer elastischen Verformung standzuhalten, wobei die Dicke der Platte (3) mehr als 100 mal kleiner als ihre Breite oder Länge ist, und eine Abziehanordnung (1) zum Lösen der aus sprödem Material hergestellten Platte (3) von der Trägeranordnung (4),
wobei die Abziehanordnung (1) mit einer anstoßenden Anordnung (2) ausgebildet ist, die sich entlang der Trägeranordnung (4) erstreckt, sodass die anstoßende Anordnung (2) und die Trägeranordnung (4) so angeordnet sind, dass sie an gegenüberliegenden Seiten der Platte (3) anliegen,
wobei die Abziehanordnung (1) mit einem Rahmen (5) zum Tragen der anstoßenden Anordnung (2) ausgebildet ist, wobei der Rahmen (5) angeordnet ist, um die Position der anstoßenden Anordnung (2) bezüglich der Trägeranordnung (4) zu bestimmen,
wobei die anstoßende Anordnung (2) eine Anlageoberfläche (C, C1, C2) umfasst, die dazu angeordnet ist, eine Oberfläche der Platte (3) zu befestigen oder anzusaugen, und eine gekrümmte Form hat, die in der Verwendung entlang einer Platte gerollt wird oder dazu angeordnet ist, sich in Teilen entlang einer gekrümmten Form zum Krümmen der Platte (3) zurückzuziehen, und
wobei die anstoßende Anordnung (2) dazu angeordnet ist, den Abstand der Anlageoberfläche (C, C1, C2) von der Trägeranordnung (4) nacheinander an benachbarten Orten zu vergrößern, um die Platte (3) von der Trägeranordnung (4) abzuziehen.

8. Anordnung (4, 1) gemäß Anspruch 7, wobei die Oberfläche der anstoßenden Anordnung (2) mindestens 700 Quadratzentimeter beträgt.

9. Anordnung (4, 1) gemäß einem Ansprüche 7 bis 8, wobei die anstoßende Anordnung mit einem Betätigungselement zum Biegen einer aus sprödem Material hergestellten Platte ausgebildet ist.

10. Anordnung (4, 1) gemäß einem der Ansprüche 7 oder 9, wobei die Anlageoberfläche ungefähr gleich groß wie die Platte ist oder eine Oberfläche von ungefähr 700 Quadratzentimetern hat.

## Revendications

1. Méthode de libération d'une plaque (3) constituée d'un matériau cassant, qui est capable de résister à une déformation élastique jusqu'au point de défaillance, à partir d'un arrangement de support (4) en utilisant un arrangement de pelage (1),
dans laquelle l'épaisseur de la plaque (3) est supérieure à une valeur 100 fois plus petite que sa largeur ou longueur, et est supportée par l'arrangement de support (4) sensiblement le long de sa surface,
dans lequel l'arrangement de pelage (1) comprend un arrangement de butée (2), ayant une surface de butée (C, C1, C2), pour venir en butée contre la plaque (3), dans laquelle la surface de butée (C, C1, C2) a une forme incurvée qui est enroulée le long de la plaque (3) ou est automatiquement et/ou manuellement incurvée depuis une forme rectiligne en une forme incurvée,
la méthode comprenant :
l'arrangement de butée (2) aspirant ou collant la plaque (3) sur sa surface de butée (C, C1, C2) au niveau du côté opposé de la plaque par rapport à l'arrangement de support (4),
l'application d'une force de tirage sur une première zone (P1) de la plaque (3) depuis une zone de la surface de butée (C, C1, C2) sur laquelle la première zone (P1) de la plaque (3) est aspirée ou collée de sorte que la première zone est déplacée dans une direction (A1) s'éloignant de l'arrangement de support (4), alors qu'une deuxième zone (P2) de la plaque adjacente à la première zone vient buter contre l'arrangement de support (4),
l'application ultérieure d'une force de tirage sur la deuxième zone (P2) depuis une zone de la surface de butée (C, C1, C2) sur laquelle la deuxième zone (P2) de la plaque (3) est aspirée ou collée de sorte que la deuxième zone est déplacée dans une direction s'éloignant de l'arrangement de support (4) alors qu'une troisième zone (P3) de la plaque adjacente à la deuxième zone vient buter contre l'arrangement de support (4),
et de la même manière l'arrangement de butée (2) déplaçant séquentiellement d'autres zones (Pn) dans une direction s'éloignant de l'arrangement de support (4) alors que des zones adjacentes respectives (Pn+1) viennent buter contre l'arrangement de support (4),
dans laquelle l'arrangement de butée (2) déplace séquentiellement lesdites zones dans une direction s'éloignant de l'arrangement de support (4) conformément à la forme incurvée de la surface de butée (C, C1, C2) de sorte que la plaque (3) est pelée à partir de l'arrangement de support (4).

2. Méthode selon la revendication 1, dans laquelle, après avoir été pelée à partir de l'arrangement de support, la plaque est maintenue au niveau de la surface de butée de l'arrangement de butée.

3. Méthode selon la revendication 2, dans laquelle la surface de butée s'étend sensiblement le long de la surface de plaque entière.

4. Méthode selon l'une quelconque des revendications précédentes, dans laquelle la plaque (3) a une épaisseur inférieure à 2 mm, de préférence inférieure à 1 mm, et a une longueur ou une largeur supérieure à 0,3 m, de préférence une surface supérieure à 700 centimètres carrés.

5. Méthode selon l'une quelconque des revendications précédentes, dans laquelle le rayon de courbure d'au moins une partie de la plaque et/ou de l'agencement de butée pendant ou après le pelage est sensiblement compris entre approximativement 1 et 100 mètres.

6. Méthode selon l'une quelconque des revendications précédentes, dans laquelle la plaque comprend un miroir destiné à être utilisé dans le domaine de l'optique adaptative.

7. Ensemble (4, 1) constitué d'un arrangement de support (4) pour supporter une plaque (3) constituée d'un matériau cassant, qui est capable de résister à une déformation élastique jusqu'au point de défaillance, dans lequel l'épaisseur de la plaque est supérieure à une valeur 100 fois plus petites que sa largeur ou longueur, et d'un arrangement de pelage (1) pour libérer la plaque (3) constituée d'un matériau cassant à partir de l'arrangement de support (4),
dans lequel l'arrangement de pelage (1) est muni d'un arrangement de butée (2) s'étendant le long de l'arrangement de support (4), de sorte que l'arrangement de butée (2) et l'arrangement de support (4) sont agencés pour faire venir en butée des côtés opposés de la plaque (3),
dans lequel l'arrangement de pelage (1) est muni d'un cadre (5) pour supporter l'arrangement de butée (2), lequel cadre (5) est agencé pour déterminer la position de l'arrangement de butée (2) par rapport à l'arrangement de support (4),
dans lequel l'arrangement de butée (2) comprend une surface de butée (C, C1, C2) qui est agencée pour coller ou aspirer une surface de la plaque (3) et a une forme incurvée qui en utilisation est enroulée le long d'une plaque ou est agencée pour se rétracter en partie le long d'une forme incurvée pour incurver la plaque (3), et
dans lequel l'arrangement de butée (2) est agencé pour augmenter la distance de la surface de butée (C, C1, C2) par rapport à l'arrangement de support (4) séquentiellement à des emplacements adjacents pour le pelage de ladite plaque (3) à partir de l'arrangement de support (4).

8. Ensemble (4, 1) selon la revendication 7, dans lequel la surface de l'arrangement de butée (2) est d'au moins 700 centimètres carrés.

9. Ensemble (4, 1) selon l'une quelconque des revendications 7 à 8, dans lequel l'agencement de butée est muni d'un élément d'actionnement pour incurver une plaque constituée d'un matériau cassant.

10. Ensemble (4, 1) selon l'une quelconque des revendications 7 ou 9, dans lequel la surface de butée est approximativement d'une taille égale à la plaque ou à une surface d'au moins 700 centimètres carrés.
